# EUROPÄISCHE PATENTSCHRIFT

(11) **EP 1 981 806 B1**
(45) Veröffentlichungstag und Bekanntmachung des Hinweises auf die Patenterteilung: **04.11.2009**
(21) Anmeldenummer: 07722774.2
(22) Anmeldetag: 26.01.2007
(51) Int. Cl.: C01B 7/04, C01B 7/07

(54) **VERFAHREN ZUR HERSTELLUNG VON CHLOR**
METHOD FOR THE PRODUCTION OF CHLORINE
PROCÉDÉ DE PRODUCTION DE CHLORE

(30) Priorität: 27.01.2006 EP 06100941
(43) Veröffentlichungstag der Anmeldung: 22.10.2008
(73) Patentinhaber: BASF SE, 67056 Ludwigshafen (DE)
(72) Erfinder: SESING, Martin, 67165 Waldsee (DE); JACOBSEN, Knud, 67067 Ludwigshafen (DE); REINHARDT, Klaus-Dieter, 67067 Ludwigshafen (DE); PALLASCH, Hans-Jürgen, 67169 Kallstadt (DE); VAN DEN ABEEL, Peter, 2930 Brasschaat (BE); SCHELLING, Heiner, 67281 Kirchheim (DE)
(74) Vertreter: Isenbruck, Günter
(86) Internationale Anmeldenummer: PCT/EP2007/000696
(87) Internationale Veröffentlichungsnummer: WO 2007/085476

(56) Entgegenhaltungen:
- EP-A1- 0 233 773
- EP-A1- 0 518 553
- EP-A1- 0 765 838

## Beschreibung

Die Erfindung betrifft ein Verfahren zur Herstellung von Chlor durch katalytische Chlorwasserstoff-Oxidation.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. Durch Überführung von Chlorwasserstoff in Chlor kann die Chlorherstellung von der Natronlaugeherstellung durch Chloralkalielektrolyse entkoppelt werden. Eine solche Entkoppelung ist attraktiv, da weltweit der Chlorbedarf stärker als die Nachfrage nach Natronlauge wächst. Zudem fällt Chlorwasserstoff in großen Mengen beispielsweise bei Phosgenierungsreaktionen, etwa bei der Isocyanat-Herstellung, als Koppelprodukt an. Der bei der Isocyanatherstellung gebildete Chlorwasserstoff wird überwiegend in der Oxichlorierung von Ethylen zu 1,2-Dichlorethan eingesetzt, das zu Vinylchlorid und schließlich zu PVC weiterverarbeitet wird.

EP-A 0 765 838 offenbart ein Verfahren zur Aufarbeitung des bei der Chlorwasserstoff-Oxidation entstehenden Reaktionsgases aus Chlor, Chlorwasserstoff, Sauerstoff und Wasserdampf, bei dem das aus dem Oxidationsreaktor austretende Reaktionsgas so weit abgekühlt wird, dass Reaktionswasser und Chlorwasserstoff in Form von konzentrierter Salzsäure auskondensieren, die konzentrierte Salzsäure von dem Reaktionsgas abgetrennt und ausgeschleust wird, das verbleibende, im Wesentlichen von Wasser und einem Teil des Chlorwasserstoffs befreite Reaktionsgas getrocknet wird, das getrocknete Reaktionsgas aus Chlor, Sauerstoff und Chlorwasserstoff auf 1 bis 30 bar verdichtet und das verdichtete Reaktionsgas gekühlt und dabei zum größten Teil verflüssigt wird, wobei nicht auskondensierbare Komponenten des Reaktionsgases zumindest teilweise in den Oxidationsreaktor zurückgeführt werden.

Zur Chlorabtrennung wird das getrocknete und verdichtete Reaktionsgasgemisch in einem als Entspannungskühler ausgebildeten, so genannten Chlor-Rekuperator bis auf einen kleinen Restanteil von ca. 10 bis 20 % verflüssigt. Der im Chlor-Rekuperator abgetrennte flüssige Chlorhauptstrom wird anschließend in einer Destillationskolonne nachgereinigt, in der das Chlor von restlichem gelöstem Chlorwasserstoff, Sauerstoff und Inertgasen befreit wird. Das am Kopf der Destillationskolonne abgezogene, im Wesentlichen aus Chlorwasserstoff, Chlor, Sauerstoff und Inertgasen bestehende Gas wird in die Kompressionsstufe zurückgeführt. Die am Chlor-Rekuperator nicht auskondensierten Gaskomponenten einschließlich des Rest-Chloranteils werden teilweise in einer Nachkühlstufe bei deutlich niedrigerer Temperatur verflüssigt. Das verbleibende Abgas aus nicht umgesetztem Chlorwasserstoff, Sauerstoff sowie Inertgasen wird in den Oxidationsreaktor recycliert. Eine Teilmenge des recyclierten Gases wird als Purge-Gasstrom abgetrennt und aus dem Verfahren ausgeschleust, um eine Aufpegelung von Verunreinigungen zu verhindern.

Bei dem in der Deacon-Reaktion eingesetzten Chlorwasserstoff handelt es sich dabei häufig um gasförmigen Chlorwasserstoff, der in anderen Herstellverfahren, beispielsweise bei der Isocyanat-Herstellung, als Koppelprodukt anfällt.

Nachteilig an den Verfahren des Standes der Technik, bei denen Chlor aus dem chlorhaltigen Produktgasstrom der Chlorwasserstoff-Oxidation ausschließlich durch Auskondensieren abgetrennt wird, ist, dass sehr tiefe Temperaturen erforderlich sind, um den Produktgasstrom weitgehend von Chlor zu befreien. Auch enthält der die nicht kondensierbaren Gasbestandteile enthaltende Restgasstrom noch erhebliche Mengen Inertgase einschließlich Kohlendioxid. Diese würden sich bei der Rückführung des sauerstoffhaltigen Restgasstroms in den Chlorwasserstoff-Oxidationsreaktor auf unzulässig hohe Werte aufpegeln, so dass von diesem Restgasstrom vor Rückführung in die Chlorwasserstoff-Oxidation ein Purge-Gasstrom abgetrennt und aus dem Verfahren ausgeschleust werden muss. Dieser Purge-Gasstrom enthält aber noch nennenswerte Mengen Chlor, da die Abtrennung von Chlor durch Auskondensieren nur unvollständig gelingt. Dabei gehen also mit dem Purge-Gasstrom nennenswerte Mengen Chlor verloren.

EP-A 0 233 773 offenbart ein Verfahren zur Herstellung von Chlor durch Oxidation eines Chlorwasserstoff enthaltenen Gases, bei dem Chlorwasserstoff in Gegenwart eines Chromoxid-Katalysators mit Sauerstoff umgesetzt wird, das erhaltene Reaktionsgasgemisch abgekühlt und zur Entfernung von Chrom mit Wasser gewaschen wird, das verbleibende Gasgemisch enthaltend Chlorwasserstoff, Sauerstoff und Chlor mit Wasser gewaschen wird, wobei nicht umgesetzter Chlorwasserstoff als wässrige Salzsäure gewonnen wird, das verbleibende Gasgemisch mit Schwefelsäure gewaschen wird, um Wasserspuren zu entfernen, das verbleibende Gasgemisch enthaltend Chlor und Sauerstoff komprimiert wird, wobei Chlor in flüssiger Form abgetrennt und anschließend destilliert wird, und das verbleibende Gas, welches hauptsächlich aus Sauerstoff besteht, in die Chlorwasserstoff-Oxidation zurückgeführt wird. In dem Chlorwasserstoff-Waschschritt wird nahezu der gesamte Chlorwasserstoff aus dem Gasstrom herausgewaschen. In der Chlordestillation wird am Kolonnenkopf ein Gasstrom abgezogen, welcher gemäß Beispiel 1 noch 9,7 Gew.-% Chlor und 33,2 Gew.-% Kohlendioxid enthält. Ein Teil dieses Gasstroms wird in die Chlorwasserstoff-Oxidation zurückgeführt, der andere Teil wird über eine Dekontaminationskolonne aus dem Verfahren ausgeschleust.

Aufgabe der Erfindung ist es, ein verbessertes Verfahren zur Herstellung von Chlor aus Chlorwasserstoff bereitzustellen, und insbesondere den Nachteilen des Standes der Technik abzuhelfen, indem der Chlorverlust des Verfahrens minimiert wird.

Gelöst wird die Aufgabe durch ein Verfahren zur Herstellung von Chlor aus Chlorwasserstoff mit den Schritten:
a) Einspeisung eines Chlorwasserstoff enthaltenden Stroms a1 und eines Sauerstoff enthaltenden Stroms a2 in eine Oxidationszone und katalytische Oxidation von Chlorwasserstoff zu Chlor, wobei ein Produktgasstrom a3 enthaltend Chlor, Wasser, Sauerstoff, Chlorwasserstoff, Kohlendioxid und Inertgase erhalten wird;
b) In Kontakt bringen des Produktgasstroms a3 in einem Phasenkontaktapparat mit wässriger Salzsäure I und teilweise Abtrennung von Wasser und von Chlorwasserstoff aus dem Strom a3, wobei ein Gasstrom b enthaltend Chlorwasserstoff, Chlor, Wasser, Sauerstoff, Kohlendioxid und gegebenenfalls Inertgase verbleibt, wobei mindestens 5 % des in dem Strom a3 enthaltenen Chlorwasserstoffs in dem Gasstrom b verbleibt;
c) Trocknung des Gasstroms b, wobei ein im Wesentlichen wasserfreier Gasstrom c enthaltend Chlorwasserstoff, Chlor, Sauerstoff, Kohlendioxid und gegebenenfalls Inertgase verbleibt;
d) teilweise Verflüssigung des Gasstroms c durch Verdichtung und Abkühlung, wobei ein zumindest teilweise verflüssigter Strom d erhalten wird;
e) Gas/Flüssig-Trennung des Stroms d in einen Gasstrom e1 enthaltend Chlor, Sauerstoff, Kohlendioxid und gegebenenfalls Inertgase und in einen Flüssigkeitsstrom e2 enthaltend Chlorwasserstoff, Chlor, Sauerstoff und Kohlendioxid und gegebenenfalls Rückführung zumindest eines Teils des Gasstroms e1 in Schritt a);
f) Trennung des Flüssigstroms e2 durch Destillation in einer Kolonne in einen Chlorstrom f1 und einen im Wesentlichen aus Chlorwasserstoff, Sauerstoff und Kohlendioxid bestehenden Strom f2, wobei ein Teil des Chlorwasserstoffs am Kolonnenkopf kondensiert und als Rücklauf in die Kolonne zurückläuft, wodurch ein Strom f2 mit einem Chlorgehalt < 1 Gew.-% gewonnen wird.

Der in dem Verfahrenschritt a) eingesetzte. Chlorwasserstoff enthaltende Einspeisungsgasstrom a1 ist üblicherweise ein chlorwasserstoffhaltiger Strom, der bei einem Verfahren als Abstrom anfällt, in dem Chlorwasserstoff als Koppelprodukt gebildet wird. Solche Verfahren sind beispielsweise
(1) die Isocyanat-Herstellung aus Phosgen und Aminen,
(2) die Säurechlorid-Herstellung,
(3) die Polycarbonat-Herstellung,
(4) die Herstellung von Vinylchlorid aus Ethylendichlorid,
(5) die Chlorierung von Aromaten.

Der Chlorwasserstoff enthaltende Einspeisungsgasstrom a1 kann Nebenbestandteile enthalten. üblicherweise enthält er Verunreinigungen, die sowohl organischer als auch anorganischer Natur sein können. Organische Verunreinigungen sind beispielsweise Kohlenwasserstoffe oder Chlorkohlenwasserstoffe.

Typische Kohlenwasserstoffe, die in den erfindungsgemäß eingesetzten, Chlorwasserstoff enthaltenden Einsatzgasströmen enthalten sein können, umfassen Aromaten wie Benzol, Toluol, Xylole und C₆-C₁₂-Aliphaten. Typische Chlorkohlenwasserstoffe umfassen Phosgen, Monochlorbenzol, Dichlorbenzol, Tetrachlorkohlenstoff, Vinylchlorid und Dichlorethan. Die Kohlenwasserstoffe und Chlorkohlenwasserstoffe können in Mengen bis 20 Vol.-%, im Allgemeinen bis 30 000 ppm, bevorzugt in Mengen bis 10 000 ppm und insbesondere in Mengen von 100 bis 3000 ppm enthalten sein. Als anorganische Nebenbestandteile können beispielsweise Kohlenmonoxid, Kohlendioxid, Stickstoff sowie weitere Inertgase, im Allgemeinen in Mengen bis 10 Vol.-%, vorzugsweise in Mengen bis zu 1 Vol.-%, enthalten sein.

Vorzugsweise wird der chlorwasserstoffhaltige Einspeisungsstrom a1 vor der Einleitung in die Oxidationszone durch Überleiten über ein Reinigungsbett und Adsorption von darin enthaltenen Kohlenwasserstoffen an dem Reinigungsbett vorgereinigt. Das Reinigungsbett besteht dabei aus geeigneten Adsorbentien, vorzugsweise in stückiger Form wie Kugeln, Extrudate oder Tabletten. Geeignete Materialien, die als Adsorbentien in Frage kommen, sind beispielsweise Aktivkohle, Aluminiumoxid, Titanoxid, Siliziumdioxid, Eisenoxid, Zeolithe und Molsiebe. Geeignete Materialien können auch Metalloxide oder Metallhalogenide, wie Kupfer- oder Rutheniumoxide oder -halogenide bzw. deren Gemische, auf einem Träger aus einem feuerfesten anorganischen Material wie Aluminiumoxid, Titanoxid oder Siliziumdioxid enthalten. Bevorzugte Adsorbentien sind Aluminiumoxid, Aktivkohle und Tonerden.

In dem Oxidationsschritt a) wird der Chlorwasserstoff enthaltende Strom a1 mit einem Sauerstoff enthaltender Strom a2 in eine Oxidationszone eingespeist und katalytisch oxidiert.

In dem auch als Deacon-Prozess bekannten katalytischen Verfahren wird Chlorwasserstoff mit Sauerstoff in einer exothermen Gleichgewichtsreaktion zu Chlor oxidiert, wobei Wasserdampf anfällt. Übliche Reaktionstemperaturen liegen zwischen 150 und 500°C, übliche Reaktionsdrucke liegen zwischen 1 und 25 bar. Ferner ist es zweckmäßig, Sauerstoff in überstöchiometrischen Mengen einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohen Drücken und dementsprechend bei gegenüber Normaldruck längeren Verweilzeiten zu arbeiten.

Geeignete Katalysatoren enthalten beispielsweise Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Geeignet sind ferner Katalysatoren, welche auf einem Träger 0,001 bis 30 Gew.-% Gold, 0 bis 3 Gew.-% eines oder mehrerer Erdalkalimetalle, 0 bis 3 Gew.-% eines oder mehrerer Alkalimetalle, 0 bis 10 Gew.-% eines oder mehrerer Seltenerdmetalle und 0 bis 10 Gew.-% eines oder mehrerer weiterer Metalle, ausgewählt aus der Gruppe bestehend aus Ruthenium, Palladium, Platin, Osmium, Iridium, Silber, Kupfer und Rhenium, jeweils bezogen auf das Gesamtgewicht des Katalysators, enthalten.

Derartige Gold enthaltende Trägerkatalysatoren weisen, insbesondere bei Temperaturen von ≤ 250°C, bei der Chlorwasserstoff-Oxidation eine höhere Aktivität als die Ruthenium enthaltenden Katalysatoren des Standes der Technik auf.

Übliche Reaktionsapparate, in denen die katalytische Chlorwasserstoff-Oxidation durchgeführt wird, sind ein Festbett- oder Wirbelbettreaktor. Die Chlorwasserstoff-Oxidation kann mehrstufig durchgeführt werden.

Die katalytische Chlorwasserstoff-Oxidation kann adiabat oder bevorzugt isotherm oder annähernd isotherm, diskontinuierlich, bevorzugt kontinuierlich, als Fließ- oder Festbettverfahren durchgeführt werden. Bevorzugt wird sie in einem Wirbelschichtreaktor bei einer Temperatur von 320 bis 400°C und einem Druck von 2 bis 8 bar durchgeführt.

Bei der isothermen oder annähernd isothermen Fahrweise können auch mehrere, also 2 bis 10, bevorzugt 2 bis 6, besonders bevorzugt 2 bis 5, insbesondere 2 bis 3 in Reihe geschaltete Reaktoren mit zusätzlicher Zwischenkühlung eingesetzt werden. Der Sauerstoff kann entweder vollständig zusammen mit dem Chlorwasserstoff vor dem ersten Reaktor oder über die verschiedenen Reaktoren verteilt zugegeben werden. Diese Reihenschaltung einzelner Reaktoren kann auch in einem Apparat zusammengeführt werden.

Eine Ausführungsform besteht darin, dass man in dem Festbettreaktor eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpem sollte das Inertmaterial bevorzugt ähnlich äußere Abmessungen haben.

Als Katalysatorformkörper eignen sich beliebige Formen, bevorzugt sind Tabletten, Ringe, Zylinder, Stern, Wagenräder oder Kugeln, besonders bevorzugt sind Ringe, Zylinder oder Sternstränge.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialien eignen sich beispielsweise Siliciumdioxid, Graphit, Titandioxid mit Rutil- oder Anatas-Struktur, Zirkondioxid; Aluminiumoxid oder deren Gemische, bevorzugt Titandioxid, Zirkondioxid, Aluminiumoxid oder deren Gemische, besonders bevorzugt gamma- oder alpha-Aluminiumoxid oder deren Gemische.

Die Kupfer- beziehungsweise die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Das Trägermaterial kann nach Tränkung und Dotierung bei Temperaturen von 100 bis 500°C, bevorzugt 100 bis 400°C beispielsweise unter einer Stickstoff-, Argon- oder Luftatmosphäre getrocknet und gegebenenfalls calciniert werden. Bevorzugt wird zunächst bei 100 bis 200°C getrocknet und anschließend bei 200 bis 400°C calciniert.

Das Volumenverhältnis von Chlorwasserstoff zu Sauerstoff am Reaktoreintritt liegt in der Regel zwischen 1:1 und 20:1, bevorzugt zwischen 2:1 und 8:1, besonders bevorzugt zwischen 2:1 und 5:1.

In einem Schritt b) wird der Produktgasstrom a3 in einem Phasenkontaktapparat mit wässriger Salzsäure I in Kontakt gebracht und Wasser und Chlorwasserstoff teilweise aus dem Strom a3 abgetrennt, wobei ein Gasstrom b enthaltend Chlorwasserstoff, Chlor, Wasser, Sauerstoff, Kohlendioxid und gegebenenfalls Inertgase verbleibt. In diesem Schritt, der auch als Quench- und Absorptionsschritt bezeichnet werden kann, wird der Produktgasstrom a3 abgekühlt und werden Wasser und Chlorwasserstoff teilweise aus dem Produktgasstrom a3 als wässrige Salzsäure abgetrennt. Der heiße Produktgasstrom a3 wird durch in Kontakt bringen mit verdünnter Salzsäure I als Quenchmittel in einem geeigneten Phasenkontaktapparat, beispielsweise einer Packungs- oder Bodenkolonne, einem Strahlwäscher oder einem Sprühturm, abgekühlt, wobei ein Teil des Chlorwasserstoffs in dem Quenchmittel absorbiert wird. Quench- und Absorptionsmittel ist Salzsäure, die nicht an Chlorwasserstoff gesättigt ist. Die Chlorwasserstoff-Konzentration der Salzsäure I und die Prozessbedingungen des Quench- und Absorptionsschrittes b) sind jedoch derart, dass Chlorwasserstoff nicht vollständig aus dem Produktgasstrom a3 abgetrennt wird, sondern zum Teil in dem den Phasenkontaktapparat verlassenden Gasstrom b verbleibt. Die Gegenwart von Chlorwasserstoff in dem Gasstrom b hat bei der nachgeschalteten Chlordestillation (Schritt f)) entscheidende Vorteile. Es verbleiben mindestens 5 %, im Allgemeinen 5 bis 80 %, bevorzugt 10 bis 60 % und besonders bevorzugt 15 bis 40 % des in dem Produktgasstrom a3 enthaltenen Chlorwasserstoffs in dem Gasstrom b.

Vorzugsweise weist die Salzsäure I eine Chlorwasserstoff-Konzentration von 27 bis 35 Gew.-% auf. Die Temperatur der Salzsäure I im Phasenkontaktapparat beträgt üblicherweise von 0 bis 150°C, vorzugsweise von 30 bis 100°C, der Druck in dem Phasenkontaktapparat beträgt üblicherweise von 0,5 bis 20 bar, vorzugsweise von 1 bis 10 bar. Der Abgasstrom a3 kann vor Eintritt in den Phasenkontaktapparat abgekühlt werden, beispielsweise in einem Wärmetauscher.

In einer bevorzugten Ausführungsform des erfindungsgemäßen Verfahrens ist der Phasenkontaktapparat zweistufig ausgeführt, wobei die erste Stufe ein Pfeifenquenchapparat und die zweite Stufe ein Fallfilm-Wärmetauscher ist. Diese Ausführung des Phasenkontaktapparates als Pfeifenquench hat den Vorteil, dass kein teurer korrosionsbeständiger Werkstoff wie z.B. Tantal verwendet werden muss, da die produktberührten Teile des Quenchapparates nur mit gekühlter Salzsäure in Kontakt kommen. Es können daher preiswerte Werkstoffe wie Graphit verwendet werden.

In einer speziellen Ausführungsform des erfindungsgemäßen Verfahrens weist der Phasenkontaktapparat folgende Ausgestaltung auf: Die erste von zwei Stufen ist als Pfeifenquench ausgeführt. Dieser besteht aus senkrecht stehenden Rohren, den so genannten Pfeifen, in die die Umlaufflüssigkeit, hier also die wässrige Salzsäure I, welche zwischen den Rohren steht, vom Gas in die Rohre mitgerissen wird. Dabei wird die kühlende Umlaufflüssigkeit im Bereich der Kronen der Quenchrohre in kleine Tröpfchen zerteilt. Durch die hohe Turbulenz und die große Austauschfläche zwischen Gas und Flüssigkeit wird ein sehr guter Wärme- und Stoffübergang erreicht. Umlaufflüssigkeit und Gas bewegen sich im Gleichstrom. Die zweite, nachgeschaltete Stufe ist ein Fallfilm-Wärmetauscher, der als Rohrbündelapparat ausgebildet ist. Durch die Rohre werden Reaktionsgas- und Umlaufflüssigkeit (Salzsäure) im Gleichstrom geführt. Gekühlt wird der Rohrbündelapparat bevorzugt mit Wasser. Durch die Einstellung der Temperatur des Fallfilm-Wärmetauschers kann der Chlorwasserstoffgehalt des Gasstroms b kontrolliert werden. Am Boden des Apparats befindet sich ein kleiner Behälter, in dem sich Flüssigkeit und Gas trennen. Die Flüssigkeit wird dem Pfeifenquenchapparat (erste Stufe) als Umlaufflüssigkeit wieder zugeführt. Zusätzlich wird dem Pfeifenquench die in der anschließenden Salzsäure-Destillation gewonnene wässrige Salzsäure II zugeführt.

In einer bevorzugten Ausführungsform des erfindungsgemäßen Verfahrens ist zwischen dem Pfeifenquench und dem Fallfilmwärmetauscher noch eine Füllkörperstrecke eingefügt. Diese gewährleistet insbesondere bei An- und Abfahrvorgängen und Minderlastfahrweise eine ausreichende Durchmischung, da im Pfeifenquench die Durchmischung aufgrund der geringeren Turbulenz dann nicht mehr ausreichend ist.

Bevor die umlaufende Salzsäure wieder auf den Pfeifenquench aufgegeben wird, kann sie in einem dem Pfeifenquench vorgeschalteten zusätzlichen Wärmetauscher abgekühlt werden. Durch die Temperaturemiedrigung der dem Pfeifenquench zugeführten Salzsäure kann - bei gleich bleibender Temperatur der aus dem Pfeifenquench ablaufenden Salzsäure - die Umlaufmenge reduziert werden. Würde dagegen auf den zusätzlichen Wärmetauscher verzichtet und stattdessen die Ablauftemperatur der Salzsäure im Fallfilmwärmetauscher zu stark herabgesetzt werden, könnte eine zu hohe Löslichkeit von Chlorwasserstoff in der wässrigen Salzsäure resultieren. In einer bevorzugten Ausführungsform des erfindungsgemäßen Verfahrens ist dieser zusätzliche Wärmetauscher als Plattenwärmetauscher ausgeführt.

Im Allgemeinen wird der Phasenkontaktapparat mit umlaufender Salzsäure I betrieben. In einer bevorzugten Ausführungsform wird zumindest ein Teil der in dem Phasenkontaktapparat umlaufenden wässrigen Salzsäure, beispielsweise 1 bis 20%, dem Phasenkontaktapparat entnommen und nachfolgend destilliert, wobei gasförmiger Chlorwasserstoff und eine an Chlorwasserstoff abgereicherte wässrige Salzsäure II gewonnen werden, und wobei der Chlorwasserstoff in Schritt a) zurückgeführt und zumindest ein Teil wässrigen Salzsäure II in den Phasenkontaktapparat zurückgeführt wird.

Die Salzsäuredestillation kann mehrstufig durchgeführt werden. Beispielsweise kann zuerst eine Druckdestillation durchgeführt werden, wobei am Kolonnenkopf Chlorwasserstoff und am Sumpf azeotrop siedende, verdünnte Salzsäure mit einem Chlorwasserstoff-Gehalt im Bereich von beispielsweise 15 bis 22 Gew.-% gewonnen wird. Der Sumpfabzugsstrom der Druckdestillationskolonne wird nachfolgend einer Vakuumdestillation unterworfen, wobei am Kolonnenkopf der Vakuumdestillationskolonne Wasser und am Kolonnensumpf eine höher konzentrierte azeotrop siedende Salzsäure mit einem Chlorwasserstoffgehalt von beispielsweise 20 bis 28 Gew.-% gewonnen wird. Die bei Druck- und Vakuumdestillation erhaltene Salzsäure kann jeweils teilweise oder vollständig (als Salzsäure II) in den Phasenkontaktapparat zurückgeführt und mit der Umlaufflüssigkeit vereinigt werden.

In einer weiteren bevorzugten Ausführungsform wird die dem Phasenkontaktapparat entnommene wässrige Salzsäure I vor Durchführung der Salzsäure-Destillation im Wesentlichen chlorfrei gestrippt. Hierzu wird vorzugsweise zumindest ein Teil des Sauerstoff enthaltenden Stroms a2, der der Oxidationszone zugeführt wird, eingesetzt, wobei es sich hierbei um sauerstoffhaltiges Frischgas oder um Kreisgas (Gasstrom e2) handeln kann. Die Strippung kann in einer üblichen Strippkolonne durchgeführt werden. Dabei kann der Chlorgehalt der Salzsäure I auf < 100 ppm, vorzugsweise < 10 ppm abgereichert werden.

Ein Teil der im Wesentlichen chlorfrei gestrippten Salzsäure I kann vor Durchführung der Salzsäure-Destillation abgetrennt und mit einem Teil der in der Salzsäure-Destillation gewonnenen wässrigen Salzsäure II, beispielsweise der Azeotropsäure aus der Druckdestillation, vereinigt werden. Auf diese Weise ist es möglich, eine chlorfreie, spezifikationsgerechte Salzsäure bestimmter Konzentration herzustellen.

Die Chlorfrei-Strippung der Salzsäure I hat den zusätzlichen Vorteil, dass ein gegebenenfalls vorhandener nach geschalteter Wärmetauscher, in dem die Salzsäure vor der Destillation erwärmt wird, nicht aus einem teuren korrosionsbeständigen Werkstoff wie z.B. Tantal gefertigt werden muss, sondern aus einem preiswerten Werkstoff wie Graphit gefertigt werden kann.

Der den Phasenkontaktapparat verlassende Gasstrom b enthält Chlor, Chlorwasserstoff, Wasser, Sauerstoff, Kohlendioxid und im Allgemeinen auch Inertgase (hauptsächlich Stickstoff, falls als sauerstoffhaltiges Gas Luft eingesetzt wird). Dieser kann in einer sich anschließenden Trocknungsstufe c) durch in Kontakt bringen mit geeigneten Trocknungsmitteln von Feuchtigkeitsspuren befreit werden. Geeignete Trocknungsmittel sind beispielsweise konzentrierte Schwefelsäure, Molsiebe oder hygroskopische Adsorbentien. Es wird ein im Wesentlichen wasserfreier Gasstrom c enthaltend Chlor, Sauerstoff, Kohlendioxid und gegebenenfalls Inertgase erhalten.

Vor dem Trocknungsschritt c) wird der Gasstrom b im Allgemeinen abgekühlt. Die Anwesenheit von Chlorwasserstoff bewirkt, dass Chlor bei Temperaturen < 10°C nicht als Chlorhydrat auskristallisiert, da das in dem Gasstrom b enthaltene Wasser in Form von Salzsäure gebunden ist. Dadurch kann auf niedrigere Temperaturen von beispielsweise -20 bis 0°C abgekühlt werden, als dies in Abwesenheit von Chlorwasserstoff in dem Strom b möglich wäre. Da die bei der Abkühlung auskondensierende Salzsäure nur einen geringen Wasserdampfdruck hat, weist der dem Trocknungsschritt c) zugeführte, gekühlte Strom b einen nur geringen Wassergehalt auf. Dies ist für den nachfolgenden Trocknungsschritt nicht unwesentlich, da hierdurch weniger Trocknungsmittel, beispielsweise konzentrierte Schwefelsäure, verbraucht wird.

In einem Schritt d) wird der Gasstrom c durch Verdichtung und Abkühlung zumindest teilweise verflüssigt. Im Allgemeinen werden beide Ströme vereinigt und durch ein- oder mehrstufige Kompression auf einen Druck im Bereich von 5 bis 50 bar verdichtet und gleichzeitig durch ein- oder mehrstufige Abkühlung auf eine Temperatur im Bereich von 0 bis -70°C abgekühlt. Die Ströme können auch getrennt verdichtet und abgekühlt werden, wobei ein oder mehrere getrennt verflüssigte Ströme d resultieren können.

In einer sich anschließenden Gas/Flüssig-Trennung e) wird der Strom d in einen Gasstrom e1 enthaltend Chlor, Sauerstoff, Kohlendioxid und gegebenenfalls Inertgase und in einen Flüssigstrom e2 enthaltend Chlor, Chlorwasserstoff, Sauerstoff und Kohlendioxid getrennt. Dieser Schritt wird auch als "Flash" bezeichnet. Die Phasentrennung kann durch Separieren lassen der Gasphase von der flüssigen Phase in einem einfachen Behälter durchgeführt werden. In einer bevorzugten Ausführungsform erfolgt die Gas/Flüssig-Trennung, indem der verdichtete Strom d auf eine Kolonne gegeben und im Gegenstrom zur aufsteigenden Gasphase geführt wird und die in der Kolonne ablaufende, chlorreiche Flüssigphase zum Teil wieder auf die Kolonne aufgegeben und so zum Teil im Kreis geführt wird. Vorzugsweise werden 0 bis 80 Gew.-% des am Kolonnensumpf entnommen chlorreichen Flüssigkeitsstroms im Kreis geführt, also vorzugsweise am Kolonnenkopf wieder aufgegeben. Dabei wird in dem aufsteigenden Gasstrom enthaltenes Kohlendioxid aus dem Gasstrom herausgelöst und kann später problemlos durch Destillation (zusammen mit verbliebenem Sauerstoff) von Chlor abgetrennt werden. Es resultiert ein kohlendioxidarmer Gasstrom e1, der zumindest teilweise in die Oxidationszone zurückgeführt werden kann. So kann der Teilstrom, der von dem in die Oxidationszone zurückgeführten Strom e1 als Purge-Gasstrom abgetrennt und aus dem Verfahren ausgeschleust wird, um eine Aufpegelung von Kohlendioxid zu verhindern, verhältnismäßig gering bleiben oder bevorzugt ganz entfallen, wodurch auch der Chlorverlust durch den Purge-Gasstrom begrenzt wird. Eine Abkühlung auf sehr niedrige Temperaturen, um Chlor nahezu vollständig zu kondensieren, ist im Schritt d) ("Chlorverflüssigung") nicht notwendig, da dem Strom e1 nur ein geringer oder bevorzugt kein Purge-Gasstrom entnommen wird, somit hierdurch im Wesentlichen kein Chlor verloren gehen kann.

Der abgetrennte Gasstrom e1 enthält im Allgemeinen 1 bis 40 Gew.-% Chlor, 1 bis 40 Gew.-% Chlorwasserstoff, 1 bis 80 Gew.-% Sauerstoff, 1 bis 80 Gew.-% Stickstoff, 0 bis 30 Gew.-% Kohlendioxid sowie 0 bis 10 Gew.-% weitere Bestandteile wie beispielsweise Edelgase und Kohlenmonoxid.

Der Flüssigstrom e2 enthält im Allgemeinen 70 bis 98 Gew.-% Chlor, 1 bis 20 Gew.-% Chlorwasserstoff, 0 bis 5 Gew.-% Sauerstoff, 0 bis 30 Gew.-% Kohlendioxid sowie 0 bis 5 Gew.-% weitere Bestandteile wie beispielsweise Edelgase und Kohlenmonoxid.

In einem Schritt f) wird der Flüssigstrom e2 durch Destillation in einer Kolonne in einen Chlorstrom f1 und einen im Wesentlichen aus Chlorwasserstoff, Sauerstoff und Kohlendioxid bestehenden Strom f2 getrennt, wobei ein Teil des Chlorwasserstoffs am Kolonnenkopf kondensiert und als Rücklauf in die Kolonne zurückläuft, wodurch ein Strom f2 mit einem Chlorgehalt < 1 Gew.-%, bevorzugt < 0,1 Gew.-% gewonnen wird.

Die Destillation wird im Allgemeinen in einer Destillationskolonne mit beispielsweise 5 bis 30 theoretischen Böden, bei einer Temperatur im Bereich von -50°C bis +110°C und bei einem Druck im Bereich von 4 bis 40 bar durchgeführt. Der so erhaltene Chlorstrom f1 weist im Allgemeinen einen Chlorgehalt von 95 bis 100 Gew.-%, vorzugsweise 98 bis 100 Gew.-%, besonders bevorzugt 99 bis 100 Gew.-% auf. Der im Wesentlichen aus Chlorwasserstoff, Sauerstoff und Kohlendioxid bestehende Strom f2 wird - gegebenenfalls nach Absorption des darin enthaltenen Chlorwasserstoffs - als Abgasstrom aus dem Verfahren ausgeschleust.

Der mit dem Chlor verflüssigte Chlorwasserstoff ermöglicht als Rücklauf vom Kopfkondensator eine nahezu vollständige Zurückhaltung des Chlors, welches somit nicht ins Abgas gelangt und somit nicht als Wertprodukt verloren geht. Bedingt durch den Chlorwasserstoff-Rücklauf ist auch eine höhere Kopftemperatur der Chloniestillationskolonne.

In einer Ausführungsform des erfindungsgemäßen Verfahrens wird der Chlordestillationskolonne ein Chlorwasserstoffstrom als flüssiger Seitenabzug entnommen und in die Oxidationszone zurückgeführt. Dieser Strom kann nach Entspannung auf Reaktordruck in einem Wärmeverbundapparat als Kühlmittel dienen. Vorzugsweise wird auf diese Weise dem Strom c ein Teil der Wärme entzogen.

In einem optionalen Schritt g) wird der Gasstrom f2 in einem Phasenkontaktapparat mit wässriger Salzsäure, vorzugsweise der durch Druckdestillation oder Vakuumdestillation gewonnenen Salzsäure II, in Kontakt gebracht und Chlorwasserstoff aus dem Strom f2 abgetrennt, wobei ein Gasstrom g, der im Wesentlichen aus Sauerstoff und Kohlendioxid besteht und daneben noch geringe Mengen Chlorwasserstoff und Chlor enthält, verbleibt. Im Allgemeinen beträgt der Chlorwasserstoffgehalt des Stroms g noch 100 bis 10000 ppm, der Chlorgehalt noch 10 bis 1000 ppm. Da der größte Teil der Inertgase einschließlich Sauerstoff bereits in dem Gas/Flüssig-Trennschritt e) abgetrennt wurde, fällt in dem Absorptionsschritt g) nur noch ein verhältnismäßig geringer Gasvolumenstrom an, so dass eine kleine Absorptionskolonne für die Chlorwasserstoff-Trennung ausreichend ist. Die Absorption kann bei Normaldruck erfolgen, insbesondere, wenn aus der Druckdestillation stammende verdünnte wässrige Salzsäure II als Absorptionsmittel eingesetzt wird.

In einem weiteren optionalen Schritt h wird der Gasstrom g mit einer Lösung enthaltend Natriumhydrogencarbonat und Natriumhydrogensulfit mit einem pH-Wert von 7 bis 9 in Kontakt gebracht, wobei Chor und Chlorwasserstoff aus dem Gasstrom g entfernt werden.

Der Abgasstrom g wird vorzugsweise in einer Waschkolonne mit einem Umpumpstrom enthaltend Natriumhydrogencarbonat und Natriumsulfit, welcher einen pH-Wert von ca. 7,0 bis 9,0 aufweist, in Kontakt gebracht. Der Umpumpstrom wird auf den Kopf einer Waschkolonne aufgegeben. Dabei laufen im Wesentlichen die nachstehenden (Gleichgewichts)reaktionen ab:

(1) CO₂ + H₂O + NaOH ⇄ NaHCO₃ + H₂O

(2) Cl₂ + NaHCO₃ ⇄ NaCl + HOCl + CO₂

(3) HOCI + Na₂SO₃ → NaCl + NaHSO₄

Ein Teil des Sumpfabzugsstroms enthaltend NaCl, NaHSO₄/Na₂SO₄, NaHSO₃/Na₂SO₃ und NaHCO₃ wird ausgeschleust. Der Umpumpstrom wird durch alkalische wässrige Natriumsulfitlösung ergänzt. Da durch diese Verfahrensweise nur wenig Kohlendioxid gebunden wird, resultiert ein verhältnismäßig geringer NaOH-Verbrauch des Waschschritts h.

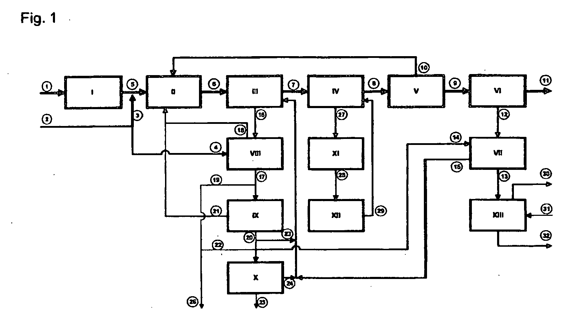

Die Erfindung wird nachstehend anhand der Zeichnung näher erläutert.

Die Figur zeigt schematisch eine spezielle Variante des erfindungsgemäßen Verfahrens.

### Monochlorbenzol-Entfernung I

Der Chlorwasserstoffstrom **1**, welcher als Koppelprodukt bei der Isocyanatherstellung anfällt, enthält organische Lösemittel, insbesondere Monochlorbenzol, in Mengen von bis zu 3000 Gew.-ppm. Zur Entfernung des Monochlorbenzols wird der Chlorwasserstoffstrom über ein Aktivkohlebett geleitet. Enthält der Chlorwasserstoffstrom größere Mengen an organischen Verbindungen, so werden diese vorher sinnvollerweise auskondensiert. Durch die Adsorption an Aktivkohle wird der Gehalt an Monochlorbenzol auf Werte <10 ppm verringert. Hierbei lassen sich in Abhängigkeit des Adsorbens auch sehr viel geringere Werte erreichen.

### Reaktor II

Sauerstoff **3**, Chlorwasserstoff **5**, Kreisgas **10**, rezyklierter Chlorwasserstoff **21** aus der Salzsäure-Druckdestillation und das Strippgas aus dem Salzsäurestripper 18 (im Wesentlichen Sauerstoff) werden im Chlorwasserstoff-Oxidationsreaktor bei ca. 330 bis 400°C und 2 bis 8 bar an einem RuO₂/Al₂O₃-Katalysator umgesetzt. Der Reaktor ist als Wirbelschichtreaktor mit internen Wärmetauschern ausgestaltet. Die Reaktoreintrittstemperatur ist > 200°C. In den Wärmetauschern wird Hochdruck-Dampf erzeugt.

### Quench III

Die heißen Reaktionsgase **6** aus dem Reaktor werden in einem Wärmeverbundapparat von Reaktionstemperatur auf ca 200 bis 300°C abgekühlt. Das vorgekühlte Produktgasgemisch gelangt in einen Quenchapparat, der zweistufig ausgeführt ist. Die erste Stufe ist als Pfeifenquench ausgeführt. Dieser besteht aus senkrecht stehenden Rohren, den so genannten Pfeifen, in die die Umlaufflüssigkeit, hier also ca. 29 bis 35 %ige wässrige Salzsäure, welche zwischen den Rohren steht, vom Gas in die Rohre mitgerissen wird. Dabei wird die kühlende Umlaufflüssigkeit im Bereich der Kronen der Quenchrohre in kleine Tröpfchen zerteilt. Durch die hohe Turbulenz und die große Austauschfläche zwischen Gas und Flüssigkeit wird ein sehr guter Wärme- und Stoffübergang erreicht. Umlaufflüssigkeit und Gas bewegen sich im Gleichstrom. Die zweite, nachgeschaltete Stufe ist ein Fallfilm-Wärmetauscher, der als Rohrbündelapparat ausgebildet ist. Durch die Rohre werden Reaktionsgas- und Umlaufflüssigkeit (Salzsäure) im Gleichstrom geführt. Gekühlt wird der Rohrbündelapparat mit Wasser. Am Boden des Apparats befindet sich ein kleiner Behälter, in dem sich Flüssigkeit und Gas trennen. Die Flüssigkeit wird dem Pfeifenquenchapparat (erste Stufe) als Umlaufflüssigkeit wieder zugeführt. Zusätzlich werden dem Pfeifenquench die in der Druckdestillation gewonnene ca. 15 bis 21 %ige azeotrop-siedende wässrige Salzsäure **23** sowie die in der Vakuumdestillation als Azeotropsäure gewonnene, ca. 20 bis 28 gew.-%ige wässrige Salzsäure **24** zugeführt. Die gesamte Flüssigkeit kann vor Zugabe in den Quench zur Reduzierung der Umlaufmenge oder der Mischtemperatur in einem zusätzlichen Wärmetauscher, z.B. einem Plattenwärmetauscher, auf Temperaturen von 20 bis 40°C gekühlt werden. Der umgepumpte Salzsäurestrom beträgt jedoch ca. das 10 bis 30-fache der Menge der vereinigten Rückführströme aus der Salzsäuredestillation.

In der ersten Stufe werden Salzsäure und nicht kondensiertes Reaktionsgas auf ca. 40 bis 100°C abgekühlt. In der zweiten Stufe erfolgt eine weitere Abkühlung auf 10 bis 50°C. Das den Quenchapparat verlassende Gasgemisch besteht im Wesentlichen aus Chlor, Sauerstoff, Kohlendioxid und gegebenenfalls Inertgasen und enthält daneben noch Chlorwasserstoff (< 15 Vol.-%) und wenig Wasser.

### Salzsäure-Druckdestillation IX

Die dem Quench entnommene, ca. 29 bis 35 gew.-%ige wässrige Salzsäure **16** wird mit dem Sauerstoff **4** im Salzsäure-Stripper VIII chlorfrei gestrippt. Der chlorhaltige Sauerstoffstrom **18** wird dem Chlorwasserstoff-Oxidationsreaktor zugeführt. Die von Chlor befreite Salzsäure wird anschließend einer Druckdestillation bei ca. 2 - 10 bar unterworfen, wobei Chlorwasserstoff **21** gewonnen und in den Chlorwasserstoff-Oxidationsreaktor rezykliert wird. Die Salzsäure **20** wird dabei auf einen Chlorwasserstoffgehalt von ca. 15 bis 21 Gew.-% abgereichert. Die gesamte Salzsäure wird anschließend gegebenenfalls einer Vakuumdestillation **X** unterworfen. Ein Teil der 15 bis 21 gew. %igen Salzsäure **22** kann auch mit einem Teil der chlorfrei gestrippten 29 bis 35 gew.-%ige Salzsäure **19** zu einer spezifikationsgerechten Salzsäure **26** abgemischt und verkauft werden.

### Salzsäure-Vakuumdestillation X

In einer nachgeschalteten Vakuumdestillation **X** wird die 15 bis 21 gew.-%ige, azeotrop-siedende wässrige Salzsäure bei einem Druck von ca. 0,05 bis 0,2 bar destilliert, wobei eine Aufkonzentrierung auf einen Chlorwasserstoff-Gehalt von ca. 20 bis 28 Gew.-% erfolgt. Wasser, welches noch Spuren von Chlorwasserstoff enthält, wird über den Kopf der Destillationskolonne abgezogen. Das Wasser **25** wird aus dem Verfahren ausgeschleust. Die 20 bis 28 gew.-%ige wässrige Salzsäure wird zur Absorption von Chlorwasserstoff aus dem chlorwasserstoffhaltigen Kopfabzugsstrom **12** der Chlordestillation eingesetzt und anschließend in den Quench zurückgeführt.

Die Salzsäure-Vakuumdestillation kann auch entfallen.

### Trocknung IV

Der feuchte Gasstrom **7** kann in einem zusätzlichen, der Trocknung vorgeschalteten Wärmetauscher auf Temperaturen < 25°C, bevorzugt < 15°C gekühlt werden. Hierdurch wird der Wasseranteil im Gasstrom deutlich reduziert. Der feuchte Gasstrom **7** wird mit konzentrierter Schwefelsäure im Gegenstrom getrocknet, wobei der Wassergehalt auf Werte < 10 ppm reduziert wird. Die erhaltene verdünnte wässrige Schwefelsäure **27** wird in einer kleinen Kolonne **XI** mit trockener Luft gestrippt und so von Chlor befreit. Die verdünnte wässrige Schwefelsäure **28** kann anschließend destillativ aufkonzentriert werden.

### Chlorverflüssigung V

Der getrocknete Gasstrom **8**, der im Wesentlichen aus Chlor und Sauerstoff besteht und daneben noch Chlorwasserstoff und Inertgase (Kohlendioxid, Stickstoff) enthält, wird mehrstufig auf ca. 10 bis 40 bar verdichtet. Das verdichtete Gas wird zunächst mit Kühlwasser, danach mit Kaltwasser von ca. 5 bis 15°C und schließlich mit Sole auf Temperaturen von ca. -10 bis -40°C abgekühlt. Zwischen der Kaltwasserkühlung und der Solekühlung wird das verdichtete Gas noch mit dem entspannten, nicht verflüssigbaren Gasstrom **10** gekühlt und dieser Gasstrom dabei vor Rückführung in den Reaktor erwärmt.

Das verdichtete und zum Teil verflüssigte, zweiphasige Gemisch wird schließlich in einem Stoffübergangsapparat aufgetrennt. Der nicht verflüssigte Gasstrom wird hierbei im Gegenstrom oder im Gleichstrom mit der Flüssigkeit, welche im Wesentlichen aus Chlor sowie gelöstem Kohlendioxid, Chlorwasserstoff und Sauerstoff besteht, in Kontakt gebracht. Hierdurch reichern sich die nicht verflüssigten Gase in dem flüssigen Chlor bis zur Erreichung des thermodynamischen Gleichgewichts an, so dass eine Abtrennung von Inertgasen, insbesondere von Kohlendioxid, über das Abgas der nachfolgenden Chlordestillation erreicht werden kann.

Der nicht verflüssigbare Gasstrom **10** wird entspannt und dient zur Kühlung des Gasstroms.

### Chlordestillation VI

Das verflüssigte Chlor **9** mit einem Chlorgehalt von > 85 Gew.-% wird einer Destillation bei ca. 10 bis 40 bar unterworfen. Die Sumpftemperatur beträgt dabei ca. 30 bis 110 °C, die Kopftemperatur je nach Chlorwasserstoffgehalt in dem verflüssigten Chlor zwischen ca. -5 bis -8°C und ca. -25 bis -30°C. Am Kolonnenkopf wird Chlorwasserstoff kondensiert und in die Kolonne zurücklaufen gelassen. Durch den HCI-Rückfluss erreicht man eine nahezu vollständige Chlorabtrennung, wodurch der Chlorverlust minimiert wird. Das Chlor **11,** das am Kolonnensumpf entnommen wird, hat eine Reinheit von > 99,5 Gew.-%. Dieses wird verdampft und anschließend z.B. einer Isocyanat-Produktionsanlage zugeführt, wo es zu Phosgen umgesetzt wird. Alternativ hierzu kann das flüssige Chlor auch abgekühlt und flüssig gelagert werden.

Der gasförmige Kopfabzugsstrom **12** der Chlordestillation enthält ca. 40 bis 85 Gew.-% Chlorwasserstoff sowie Sauerstoff und Kohlendioxid.

### Chlorwasserstoff-Absorption VII

Der Chlorwasserstoff aus dem Abgasstrom **12** der Chlordestillation wird durch Inkontaktbringen mit der ca. 15 bis 21 gew.-%igen wässrigen Salzsäure aus der Druckdestillation absorbiert. Die Salzsäure wird in den Quench zurückgeführt. Das verbleibende Abgas aus Inerten (N₂, Ar), Sauerstoff, Kohlendioxid, geringen Mengen Chlorwasserstoff und Spuren von Chlor wird anschließend in einer Abgaswäsche von Chlor- und HCl-Resten durch Waschen mit alkalischer wässriger Natriumhydrogensulfit-Lösung befreit.

### Sulfit-Wäsche XIII

Der Abgasstrom **13** wird in einer Waschkolonne mit einem Umpumpstrom enthaltend Natriumhydrogencarbonat und Natriumsulfit, welcher einen pH-Wert von ca. 8 bis 10 aufweist, in Kontakt gebracht. Der Umpumpstrom wird auf den Kopf der Waschkolonne aufgegeben. Ein Teil des Sumpfabzugsstroms enthaltend NaCl, NaHSO₄, NaHSO₃ und NaHCO₃ wird ausgeschleust. Der Umpumpstrom wird durch alkalische wässrige Natriumsulfitlösung ergänzt.

### Kreisgasbehandlung

Das nicht verflüssigte Kreisgas **10** aus der Chlorverflüssigung kann in einem zusätzlichen Schritt, z.B. durch Absorption, Adsorption oder über eine Membran, von unerwünschten Bestandteilen befreit werden, welche z.B. als Katalysatorgift wirken können. Zudem kann durch die gezielte Abtrennung von HCl durch Absorption und Chlor, z.B. durch Membrantrennung, das Kreisgas von Chlor und HCl befreit werden und komplett verworfen werden.

## Patentansprüche

1. Verfahren zur Herstellung von Chlor aus Chlorwasserstoff mit den Schritten:
a) Einspeisung eines Chlorwasserstoff enthaltenden Stroms a1 und eines Sauerstoff enthaltenden Stroms a2 in eine Oxidationszone und katalytische Oxidation von Chlorwasserstoff zu Chlor, wobei ein Produktgasstrom a3 enthaltend Chlor, Wasser, Sauerstoff, Kohlendioxid und Inertgase erhalten wird;
b) Inkontaktbringen des Produktgasstroms a3 in einem Phasenkontaktapparat mit wässriger Salzsäure **I** und teilweise Abtrennung von Wasser und von Chlorwasserstoff aus dem Strom a3, wobei ein Gasstrom b enthaltend Chlorwasserstoff, Chlor, Wasser, Sauerstoff, Kohlendioxid und gegebenenfalls Inertgase verbleibt, wobei mindestens 5% des in dem Strom a3 enthaltenen Chlorwasserstoffs in dem Gasstrom b verbleibt;
c) Trocknung des Gasstroms b, wobei ein im Wesentlichen wasserfreier Gasstrom c enthaltend Chlorwasserstoff, Chlor, Sauerstoff, Kohlendioxid und gegebenenfalls Inertgase verbleibt;
d) teilweise Verflüssigung des Gasstroms c durch Verdichtung und Abkühtung, wobei ein zumindest teilweise verflüssigter Strom d erhalten wird;
e) Gas/Flüssig-Trennung des Stroms d in einen Gasstrom e1 enthaltend Chlor, Sauerstoff, Kohlendioxid, Chlorwasserstoff und gegebenenfalls Inertgase und in einen Flüssigkeitsstrom e2 enthaltend Chlorwasserstoff, Chlor, Sauerstoff und Kohlendioxid und gegebenenfalls Rückführung zumindest eines Teils des Gasstroms e1 in Schritt a);
f) Trennung des Flüssigstroms e2 durch Destillation in einer Kolonne in einen Chlorstrom f1 und einen im Wesentlichen aus Chlorwasserstoff, Sauerstoff und Kohlendioxid bestehenden Strom f2, wobei ein Teil des Chlorwasserstoffs am Kolonnenkopf kondensiert und als Rücklauf in die Kolonne zurückläuft, wodurch ein Strom f2 mit einem Chlorgehalt < 1 Gew.-% gewonnen wird.

2. Verfahren nach Anspruch 1, **dadurch gekennzeichnet, dass** die in Schritt b) eingesetzte wässrige Salzsäure eine Chlorwasserstoff-Konzentration von 27 bis 35 Gew.-% aufweist.

3. Verfahren nach Anspruch 1 oder 2, **dadurch gekennzeichnet, dass** zumindest ein Teil der in dem Phasenkontaktapparat umlaufenden wässrigen Salzsäure dem Phasenkontaktapparat entnommen und nachfolgend destilliert wird, wobei gasförmiger Chlorwasserstoff und eine an Chlorwasserstoff abgereicherte wässrige Salzsäure **II** gewonnen werden, und wobei der Chlorwasserstoff in Schritt a) zurückgeführt und zumindest ein Teil wässrigen Salzsäure II in den Phasenkontaktapparat zurückgeführt wird.

4. Verfahren nach Anspruch 3, **dadurch gekennzeichnet, dass** die dem Phasenkontaktapparat entnommene wässrige Salzsäure I vor Durchführung der Salzsäure-Destillation im Wesentlichen chlorfrei gestrippt wird.

5. Verfahren nach Anspruch 4, **dadurch gekennzeichnet, dass** ein Teil der im Wesentlichen chlorfrei gestrippten Salzsäure **I** vor Durchführung der Salzsäure-Destillation abgetrennt und mit einem Teil der in der Salzsäure-Destillation gewonnenen wässrigen Salzsäure **II** vereinigt wird.

6. Verfahren nach Anspruch 4 oder 5, **dadurch gekennzeichnet, dass** die wässrige Salzsäure I mit zumindest einem Teil des Sauerstoff enthaltenden Stroms a2 im Wesentlichen chlorfrei gestrippt wird.

7. Verfahren nach einem der Ansprüche 1 bis 6, **dadurch gekennzeichnet, dass** die Gas/Flüssig-Trennung in Schritt e) durchgeführt wird, indem der verdichtete Strom d auf eine Kolonne gegeben wird und zum Teil im Kreis geführt wird, wobei der in dem chlorreichen Flüssigkeitsstrom gelöste Sauerstoff und gegebenenfalls gelöste Inertgase durch den in der Kolonne aufsteigenden Gasstrom aus dem ablaufenden Flüssigkeitsstrom herausgestrippt und gleichzeitig in dem aufsteigenden Gasstrom enthaltenes Kohlendioxid von dem ablaufenden Flüssigkeitsstrom aus dem Gasstrom herausgelöst wird.

8. Verfahren nach einem der Ansprüche 1 bis 7, **dadurch gekennzeichnet, dass** in einem Schritt g) der Gasstrom f2 in einem Phasenkontaktapparat mit wässriger Salzsäure in Kontakt gebracht und Chlorwasserstoff aus dem Strom f2 abgetrennt wird, wobei ein Gasstrom g, der im Wesentlichen aus Sauerstoff und Kohlendioxid besteht und daneben noch geringe Mengen Chlorwasserstoff und Chlor enthält, verbleibt.

9. Verfahren nach Anspruch 8, **dadurch gekennzeichnet, dass** in einem zusätzlichen Schritt h) der Gasstrom g mit einer Lösung enthaltend Natriumhydrogencarbonat und Natriumhydrogensulfit mit einem pH-Wert von 7 bis 9 in Kontakt gebracht wird, wobei Chlor und Chlorwasserstoff aus dem Gasstrom g entfernt werden.

## Claims

1. A process for preparing chlorine from hydrogen chloride, which comprises the steps:
a) feeding of a stream a1 comprising hydrogen chloride and of a stream a2 comprising oxygen into an oxidation zone and catalytic oxidation of hydrogen chloride to chlorine, giving a product gas stream a3 comprising chlorine, water, oxygen, carbon dioxide and inert gases;
b) contacting of the product gas stream a3 with aqueous hydrochloric acid I in a phase contact apparatus and partial separation of water and of hydrogen chloride from the stream a3, leaving a gas stream b comprising hydrogen chloride, chlorine, water, oxygen, carbon dioxide and possibly inert gases, with at least 5% of the hydrogen chloride comprised in the stream a3 remaining in the gas stream b;
c) drying of the gas stream b to leave a gas stream c which is substantially free of water and comprises hydrogen chloride, chlorine, oxygen, carbon dioxide and possibly inert gases;
d) partial liquefaction of the gas stream c by compression and cooling, giving an at least partially liquefied stream d;
e) gas/liquid separation of the stream d into a gas stream e1 comprising chlorine, oxygen, carbon dioxide, hydrogen chloride and possibly inert gases and a liquid stream e2 comprising hydrogen chloride, chlorine, oxygen and carbon dioxide and, if appropriate, recirculation of at least part of the gas stream e1 to step a);
f) separation of the liquid stream e2 into a chlorine stream f1 and a stream f2 consisting essentially of hydrogen chloride, oxygen and carbon dioxide by distillation in a column, with part of the hydrogen chloride condensing at the top of the column and running back as runback into the column, as a result of which a stream f2 having a chlorine content of < 1% by weight is obtained.

2. The process according to claim 1, wherein the aqueous hydrochloric acid used in step b) has a hydrogen chloride concentration of from 27 to 35% by weight.

3. The process according to claim 1 or 2, wherein at least part of the aqueous hydrochloric acid circulating in the phase contact apparatus is taken off from the phase contact apparatus and subsequently distilled to give gaseous hydrogen chloride and an aqueous hydrochloric acid II which has been depleted in hydrogen chloride, with the hydrogen chloride being recirculated to step a) and at least part of the aqueous hydrochloric acid II being recirculated to the phase contact apparatus.

4. The process according to claim 3, wherein the aqueous hydrochloric acid I taken off from the phase contact apparatus is stripped to make it essentially chlorine-free before the hydrochloric acid distillation is carried out.

5. The process according to claim 4, wherein part of the stripped, essentially chlorine-free hydrochloric acid I is separated off before the hydrochloric acid distillation is carried out and is combined with part of the aqueous hydrochloric acid II obtained in the hydrochloric acid distillation.

6. The process according to claim 4 or 5, wherein the aqueous hydrochloric acid I is stripped to make it essentially chlorine-free by means of at least part of the oxygen-comprising stream a2.

7. The process according to any of claims 1 to 6, wherein the gas/liquid separation in step e) is effected by introducing the compressed stream d into a column at the top and recirculating part of it, with the oxygen dissolved in the chlorine-rich liquid stream and any dissolved inert gases being stripped out of the descending liquid stream by the gas stream ascending in the column, and carbon dioxide present in the ascending gas stream being simultaneously dissolved out of the gas stream by the descending liquid stream.

8. The process according to any of claims 1 to 7, wherein, in a step g), the gas stream f2 is brought into contact with aqueous hydrochloric acid in a phase contact apparatus and hydrogen chloride is separated off from the stream f2, leaving a gas stream g which consists essentially of oxygen and carbon dioxide and further comprises small amounts of hydrogen chloride and chlorine.

9. The process according to claim 8, wherein, in an additional step h), the gas stream g is brought into contact with a solution comprising sodium hydrogencarbonate and sodium hydrogen sulfite and having a pH of from 7 to 9, resulting in chlorine and hydrogen chloride being removed from the gas stream g.

## Revendications

1. Procédé pour la préparation de chlore à partir de chlorure d'hydrogène présentant les étapes :
a) introduction d'un flux a1 contenant du chlorure d'hydrogène et d'un flux a2 contenant de l'oxygène dans une zone d'oxydation et oxydation catalytique de chlorure d'hydrogène en chlore, avec obtention d'un flux gazeux de produits a3, contenant du chlore, de l'eau, de l'oxygène, du dioxyde de carbone et des gaz inertes ;
b) mise en contact du flux gazeux de produits a3 dans un appareil de mise en contact de phases avec de l'acide chlorhydrique aqueux I et séparation partielle de l'eau et de chlorure d'hydrogène du flux a3, où un flux gazeux b contenant du chlorure d'hydrogène, du chlore, de l'eau, de l'oxygène, du dioxyde de carbone et le cas échéant des gaz inertes restant, au moins 5% du chlorure d'hydrogène contenu dans le flux a3 restant dans le flux gazeux b ;
c) séchage du flux gazeux b, où un flux gazeux c essentiellement exempt d'eau, contenant du chlorure d'hydrogène, du chlore, de l'oxygène, du dioxyde de carbone et le cas échéant des gaz inertes reste ;
d) liquéfaction partielle du flux gazeux c par compression et refroidissement, avec obtention d'un flux d au moins partiellement liquéfié ;
e) séparation gaz/liquide du flux d en un flux gazeux e1 contenant du chlore, de l'oxygène, du dioxyde de carbone, du chlorure d'hydrogène et le cas échéant des gaz inertes et en un flux liquide e2 contenant du chlorure d'hydrogène, du chlore, de l'oxygène et du dioxyde de carbone et le cas échéant recyclage d'au moins une partie du flux gazeux e1 dans l'étape a) ;
f) séparation du flux liquide e2 par distillation dans une colonne en un flux de chlore f1 et un flux f2 constitué essentiellement par du chlorure d'hydrogène, de l'oxygène et du dioxyde de carbone, une partie du chlorure d'hydrogène condensant en tête de colonne et revenant comme reflux dans la colonne, suite à quoi on obtient un flux f2 présentant une teneur en chlore < 1% en poids.

2. Procédé selon la revendication 1, **caractérisé en ce que** l'acide chlorhydrique aqueux utilisé dans l'étape b) présente une concentration en chlorure d'hydrogène de 27 à 35% en poids.

3. Procédé selon la revendication 1 ou 2, **caractérisé en ce qu'**au moins une partie de l'acide chlorhydrique aqueux en circulation dans l'appareil de mise en contact de phases est prélevé de l'appareil de mise en contact de phases et ensuite distillé, avec obtention de chlorure d'hydrogène gazeux et d'acide chlorhydrique II aqueux appauvri en chlorure d'hydrogène et où le chlorure d'hydrogène est recyclé dans l'étape a) et au moins une partie de l'acide chlorhydrique II aqueux est recyclée dans l'appareil de mise en contact de phases.

4. Procédé selon la revendication 3, **caractérisé en ce que** l'acide chlorhydrique I aqueux prélevé de l'appareil de mise en contact de phases est réextrait de manière à être essentiellement exempt de chlore avant la réalisation de la distillation d'acide chlorhydrique.

5. Procédé selon la revendication 4, **caractérisé en ce qu'**une partie de l'acide chlorhydrique I réextrait de manière à être essentiellement exempt de chlore avant la réalisation de la distillation d'acide chlorhydrique est séparée et rassemblée avec une partie de l'acide chlorhydrique II aqueux obtenu dans la distillation d'acide chlorhydrique.

6. Procédé selon la revendication 4 ou 5, **caractérisé en ce que** l'acide chlorhydrique I aqueux est réextrait de manière à être essentiellement exempt de chlore avec au moins une partie du flux a2 contenant l'oxygène.

7. Procédé selon l'une quelconque des revendications 1 à 6, **caractérisé en ce que** la séparation gaz/liquide dans l'étape e) est réalisée **en ce que** le flux d comprimé est appliqué sur une colonne et est guidé en partie en circulation, où l'oxygène dissous dans le flux liquide riche en chlore et le cas échéant les gaz inertes dissous sont réextraits du flux liquide descendant par le flux gazeux ascendant dans la colonne et le dioxyde de carbone contenu dans le flux gazeux ascendant est simultanément éliminé du flux gazeux par le flux liquide descendant.

8. Procédé selon l'une quelconque des revendications 1 à 7, **caractérisé en ce que** dans une étape g), le flux gazeux f2 est mis en contact dans un appareil de mise en contact des phases avec de l'acide chlorhydrique aqueux et le chlorure d'hydrogène est séparé du flux f2, où un flux gazeux g, qui est essentiellement constitué d'oxygène et de dioxyde de carbone et qui contient en outre encore des faibles quantités de chlorure d'hydrogène et de chlore reste.

9. Procédé selon la revendication 8, **caractérisé en ce que** dans une étape supplémentaire h), le flux gazeux g est mis en contact avec une solution contenant de l'hydrogénocarbonate de sodium et de l'hydrogénosulfite de sodium présentant un pH de 7 à 9, le chlore et le chlorure d'hydrogène étant éliminés du flux gazeux g.
